Europäisches Patentamt

European Patent Office

Office européen des brevets

(19)

(11) Numéro de publication : **0 686 844 A1**

# (12) DEMANDE DE BREVET EUROPEEN

(21) Numéro de dépôt : **95401334.8**

(22) Date de dépôt : **08.06.95**

(51) Int. Cl.$^6$ : **G01N 13/02, B23K 31/12**

(30) Priorité : **09.06.94 FR 9407047**

(43) Date de publication de la demande :
**13.12.95 Bulletin 95/50**

(84) Etats contractants désignés :
**BE CH DE ES IT LI PT**

(71) Demandeur : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur : **Leturmy, Marc**
**1 rue Louis Siou**
**F-78890 Garanciere (FR)**
Inventeur : **Potier, Nicolas**
**9 rue Pasteur**
**F-92210 Saint Cloud (FR)**

(74) Mandataire : **Le Moenner, Gabriel et al**
**L'AIR LIQUIDE, Société Anonyme**
**pour l'étude et l'exploitation des procédés**
**Georges Claude**
**75, Quai d'Orsay**
**F-75321 Paris Cédex 07 (FR)**

(54) **Procédé et dispositif de mesure de mouillabilité sous atmosphère contrôlée**

(57)    L'invention concerne un dispositif permettant d'effectuer des mesures de mouillabilité sous atmosphère contrôlée, comprenant un appareil (5) de mesure de la mouillabilité d'au moins une portion de surface d'un échantillon par une brasure métallique liquide, au moins partiellement inclus dans une enceinte (6), qui comporte un injecteur de gaz comprenant au moins un ensemble de canalisations (10) monté en série et/ou en parallèle, dont au moins une portion comporte des orifices d'injection de gaz, et alimenté par au moins une conduite d'amenée de gaz, connectée à l'ensemble au niveau d'un noeud primaire de connexion, le dimensionnement de l'ensemble respectant la relation suivante :

$\Sigma\omega_i / \Sigma\phi_i \geq 1$ préférentiellement $\geq 1,5$ ;

où $\Sigma\omega_i$ représente la somme des sections internes des conduites d'amenée de gaz qui alimentent l'ensemble et $\Sigma\phi_i$ représente la somme des sections des orifices d'injection de gaz de l'ensemble de canalisations.

FIG.2

EP 0 686 844 A1

L'invention concerne les appareils de mesure de brasabilité ou de mouillabilité, couramment appelés "méniscodynamographes" ou "méniscographes", ou encore "balances de mouillage" (en anglais "wetting balance").

Elle s'adresse notamment aux étapes d'évaluation de la brasabilité ou de la mouillabilité de surfaces métalliques, couramment pratiquées dans l'industrie du brasage en électronique, qu'il s'agisse de brasage par refusion ou de brasage à la vague.

Les machines de brasage à la vague sont traditionnellement utilisées pour le brasage de composants sur circuit électronique (qu'il s'agisse de composants insérés dans le circuit ou de composants montés en surface sur ce circuit), mais aussi pour l'étamage des terminaisons de composants électroniques ou encore pour le brasage de bandes de contact sur supports électroniques tels que des circuits hybrides.

Ainsi, la conception de ces machines est telle, qu'après avoir été fluxés dans une zone amont de la machine (de façon principalement à désoxyder les surfaces métalliques pour faciliter leur mouillage ultérieur par la soudure), les composants à braser ou à étamer sont amenés en contact avec une ou plusieurs vagues de soudure liquide obtenue(s) par pompage du bain de soudure contenu dans un bac à travers une buse.

L'application du flux chimique en entrée de machine donne lieu généralement à la nécessité pour l'utilisateur de pratiquer en sortie de machine, après brasage ou étamage, une opération de nettoyage des produits, souvent à l'aide de solvants chlorés, permettant d'éliminer les résidus de flux qui persistent sur le circuit ou le composant.

Si ces machines sont traditionnellement ouvertes à l'atmosphère d'air ambiant, on constate en pratique l'utilisation croissante d'une atmosphère inerte dans ces machines de brasage à la vague, principalement dans le but d'éviter la formation de couches d'oxyde à la surface du bain de soudure du fait de son exposition à l'air, mais aussi dans un contexte international de protection de l'environnement, en combinaison avec l'utilisation de flux de faible activité laissant un taux de résidus très faible sur les circuits, ce qui permet d'éliminer carrément l'opération de nettoyage ultérieure de ces circuits, donc l'utilisation de solvants nocifs.

Le brasage par refusion repose, lui, sur un principe différent : il consiste à déposer une pâte à braser sur des plages prédéterminées, localisées à la surface du circuit, à mettre en contact les composants et la pâte à braser, puis à chauffer la pâte à braser de façon à réaliser localement les joints de soudure. Dans ce cas du brasage par refusion, le flux est inclus dans la composition de la pâte à braser qui comprend par ailleurs notamment une poudre d'un alliage métallique (le plus souvent un alliage étain-plomb).

Ici encore, on constate l'utilisation croissante d'atmosphères inertes contrôlées, tant pour une recherche d'amélioration de la qualité du joint de brasure obtenu, que pour permettre ici encore l'utilisation de pâtes à braser contenant des flux faibles résidus pour lesquels il est possible d'éviter l'opération de nettoyage finale des circuits.

Dans ce contexte, le méniscographe est souvent un élément clef de l'atelier ou du site d'assemblage en électronique. Il est utilisé notamment pour l'évaluation de la brasabilité des composants (test de réception des composants), de la mouillabilité des substrats utilisés pour la fabrication des circuits, qu'il s'agisse de substrats du type circuits imprimés ou circuits hybrides (réception des substrats), du temps de mouillage, de l'efficacité des flux, de l'efficacité des crèmes à braser etc. ...

Son principe, bien connu de l'homme du métier, est de déterminer l'angle de mouillage d'une brasure sur un échantillon (qu'il s'agisse d'un échantillon du type composant ou encore du type substrat), par une mesure de la force de mouillage exercée par la brasure sur la surface de l'échantillon lors de l'immersion de cet échantillon dans un bain de brasure liquide. Une relation classique lie notamment la force résultante (entre la force de mouillage proprement dite et la poussée d'Archimède), l'angle de mouillage, la masse volumique de l'alliage testé, la tension de surface liquide/vapeur du système, et le volume immergé de l'échantillon dans l'alliage en fusion.

Ainsi, on considère classiquement que pour un angle de mouillage $\theta$ supérieur ou égal à zéro et inférieur ou égal à 30°, la mouillabilité est qualifiée de très bonne, pour $\theta$ strictement supérieur à 30° et inférieur ou égal à 40°, la mouillabilité est qualifiée de bonne, pour $\theta$ supérieur à 40° et inférieur ou égal à 55°, la mouillabilité est acceptable, pour un angle $\theta$ strictement supérieur à 55° et inférieur ou égal à 70°, la mouillabilité est dite faible, et enfin pour un angle $\theta$ strictement supérieur à 70°, la mouillabilité est qualifiée de mauvaise.

Comme signalé plus haut, les procédés de brasage (qu'il s'agisse par exemple de brasage par refusion ou de brasage à la vague), étaient jusqu'ici le plus couramment pratiqués sous atmosphère d'air ambiant. Les méniscographes commercialement disponibles s'adaptaient donc parfaitement à cette situation en présentant une structure ouverte à l'atmosphère environnante.

Dans le nouveau contexte d'une utilisation croissante d'atmosphères inertes contrôlées durant les procédés de brasage, les utilisateurs de ces industries montrent actuellement un intérêt croissant pour le fait de pouvoir disposer de méniscographes pouvant fonctionner sous atmosphère protectrice, contenant des concentrations résiduelles d'oxygène aussi faibles que quelques dizaines de ppm, voire quelques ppm d'oxygène.

L'objectif est ainsi de pouvoir reproduire les conditions d'atmosphère pratiquées au jour le jour dans leur four ou machine de brasage, y compris les conditions les plus sévères et restrictives de concentrations résiduelles d'oxygène.

Ainsi, les besoins les plus couramment exprimés sont les suivants:

- pouvoir effectuer des tests comparatifs d'évaluation de la brasabilité (on trouve souvent indifféremment les deux expressions brasabilité ou mouillabilité) des surfaces entre une atmosphère d'azote comprenant une concentration déterminée d'oxygène résiduelle, et une atmosphère traditionnelle d'air ;
- la réception (qualification) des composants et substrats reçus par l'utilisateur, dans les conditions d'atmosphères où ils seront ultérieurement traités dans le procédé de brasage utilisé.

La réalisation de tels souhaits des utilisateurs nécessite donc la mise en place d'atmosphères contrôlées (généralement inertes) dans de tels méniscographes, dans des conditions permettant l'obtention de concentrations résiduelles d'oxygène parfaitement contrôlées, y compris très faibles.

Dans ce contexte, il est apparu à la Demanderesse, que la solution à apporter aux problèmes d'inertage posés par les utilisateurs n'était pas seulement la réalisation d'un inertage optimisé (temps d'inertage rapide, concentrations résiduelles d'oxygène très faibles, consommation de gaz économiquement acceptable), mais aussi que l'atmosphère mise en place (donc le soufflage de gaz correspondant) ne constitue pas une perturbation de la mesure, c'est-à-dire de l'outil de grande précision que constitue une balance de mouillage ou méniscographe.

Une fois posées, ces deux conditions d'inertage efficace et rapide et de non-perturbation de la mesure apparaissent relativement incompatibles.

Dans un contexte plus général, la Demanderesse a récemment proposé dans la demande de brevet français déposée sous le N° FR-A-93.15503, un dispositif d'injection de gaz pour la formation d'une atmosphère contrôlée dans un espace confiné, convenant tout particulièrement pour la mise en place d'une atmosphère contrôlée dans une ou plusieurs zones d'une machine de brasage à la vague, ou encore dans tout ou partie d'un four continu utilisé pour des applications telles que brasage ou encore recuit, revenu, frittage, ou tout autre traitement thermique.

La présente invention a pour objet de proposer un nouveau dispositif de mesure de mouillabilité dont la configuration permet d'effectuer la mesure tant dans des conditions classiques de fonctionnement sous air que dans des conditions d'atmosphère contrôlée (notamment inerte) pour lesquelles :

- on peut atteindre si nécessaire une atmosphère substantiellement dépourvue d'oxygène (concentration résiduelle d'oxygène pouvant aller de quelques ppm à quelques dizaines de milliers de ppm selon l'application de l'utilisateur), en un temps rapide (ne dépassant pas quelques minutes), et pour un débit de gaz économiquement acceptable ;
- la mise en place de l'atmosphère contrôlée est réalisée sans perturbation de la balance donc sans perturbation de la mesure.

Pour ce faire, le dispositif permettant d'effectuer des mesures de mouillabilité sous atmosphère contrôlée selon l'invention comprend un appareil de mesure de la mouillabilité d'au moins une portion de surface d'un échantillon par une brasure métallique liquide, appareil du genre permettant la mesure de la force de mouillage exercée par la brasure sur la surface lors de l'immersion de tout ou partie de l'échantillon dans un bain de ladite brasure liquide,

et se caractérise en ce que l'appareil est au moins partiellement inclus dans une enceinte, permettant d'isoler au moins le bain de brasure de l'atmosphère environnante, l'enceinte comportant en sa partie supérieure ou en sa partie inférieure un injecteur de gaz qui comprend au moins un ensemble de canalisations monté en série et/ou en parallèle, dont au moins une portion de canalisation comporte des orifices d'injection de gaz, ledit ensemble étant alimenté par au moins une conduite d'amenée de gaz, chaque conduite étant connectée à l'ensemble au niveau d'un noeud primaire de connexion, le dimensionnement de l'ensemble respectant la relation suivante :

$$\Sigma\omega_i / \Sigma\phi_i \geqq 1 \text{ préférentiellement} \geqq 1,5 ;$$

où $\Sigma\omega_i$ représente la somme des sections internes des conduites d'amenée de gaz qui alimentent l'ensemble et $\Sigma\phi_i$ représente la somme des sections des orifices d'injection de gaz de l'ensemble de canalisations.

Selon une des mises en oeuvre de l'invention, l'enceinte comporte en sa partie supérieure ou en sa partie inférieure, une chambre, séparée du reste de l'enceinte par une structure de diffuseur, et à l'intérieur de laquelle est disposé ledit injecteur de gaz.

Le diffuseur pourra alors par exemple être constitué d'une tôle perforée. Le pourcentage de vide de la tôle perforée sera alors avantageusement inférieur à 40 %, et préférentiellement inférieur à 20 %.

Selon une autre mise en oeuvre de l'invention, le diffuseur est constitué d'une plaque réalisée en un matériau poreux.

On utilisera avantageusement pour réaliser la tôle perforée, un matériau résistant aux températures pratiquées classiquement dans l'environnement d'un méniscographe, tel que par exemple de l'acier inoxydable ou encore une matière plastique. Pour ce qui est du diffuseur en matière poreuse, on peut envisager par exemple des matériaux céramiques. Les matériaux utilisés devant s'adapter notamment aux conditions de température mais aussi aux niveaux d'oxygène résiduel recherchés de façon à ne pas introduire une pollution additionnelle.

Le gaz injecté pourra être aussi bien un gaz neutre (tel l'azote, l'argon ou encore l'hélium), quand il s'agit de mettre en place une atmosphère protectrice inerte, qu'un gaz plus actif tel que par exemple de l'hydrogène ou des mélanges gaz inertes/hydrogène, ou encore des mélanges gaz inertes/silane quand on veut tester des atmosphères auxquelles on veut faire jouer un rôle plus actif tel que du décapage de surfaces.

Pour ce qui est de la partie inerte de l'atmosphère mise en place, on pourra utiliser un gaz obtenu par voie cryogénique, mais aussi, selon les caractéristiques recherchées (par exemple la teneur en oxygène), une source de gaz obtenue par séparation d'air par perméation ou adsorption.

On entend par "atmosphère contrôlée" selon l'invention, une atmosphère dont la composition est simplement prédéterminée, le cas échéant mesurée (que ce soit en continu, de façon séquentielle ou au démarrage du dispositif) voire régulée (c'est à dire dont la composition est maintenue à la composition prédéterminée souhaitée par apport de gaz frais).

Ainsi, à titre d'illustration, si l'on considère l'exemple d'un cas où l'on souhaiterait maintenir à l'intérieur du dispositif une atmosphère inerte à teneur contrôlée en oxygène (par exemple voisine de 100 ppm d'oxygène résiduel), on pourra selon l'invention adopter un des fonctionnements suivants :

- calibrer le mélange injecté de façon que sa composition corresponde à une teneur en oxygène résiduel d'environ 100 ppm (qu'il s'agisse par exemple d'azote de perméation, d'adsorption, ou encore d'un mélange azote cryogénique/oxygène préalablement calculé et effectué) ;
- injecter un tel mélange et s'assurer par au moins une mesure (qu'elle soit ponctuelle, par exemple initiale, ou régulière) de l'atmosphère à l'intérieur du dispositif de la concentration résiduelle d'oxygène ; ou encore
- injecter un tel mélange et réguler l'atmosphère à l'intérieur du dispositif par une mesure régulière de la concentration résiduelle d'oxygène et action sur l'approvisionnement en gaz frais lorsqu'il est constaté une dérive de la concentration mesurée par rapport à une consigne choisie.

Comme il apparaîtra clairement à l'homme du métier, le dispositif selon l'invention permet d'effectuer des mesures sous atmosphère contrôlée, mais aussi sous atmosphère classique d'air pour faire des mesures comparatives.

Selon un des aspects de l'invention, au moins une des conduites d'amenée de gaz de l'injecteur comporte elle-même des orifices d'injection de gaz.

Le dimensionnement de l'ensemble suit alors la relation suivante:

$$\Sigma\omega_i / (\Sigma\phi_i + \Sigma\alpha_i) \geqq 1, \text{ préférentiellement} \geqq 1,5,$$

où $\Sigma\omega_i$ représente la somme des sections internes desdites conduites d'amenée de gaz qui alimentent l'ensemble, $\Sigma\phi_i$ représente la somme des sections des orifices d'injection de gaz de l'ensemble de canalisations, et $\Sigma\alpha_i$ représente la somme des sections des orifices d'injection de la ou des conduite(s) considérée(s) qui comporte(nt) des orifices d'injection de gaz.

Selon un autre aspect de l'invention, les conduites d'amenée de gaz sur l'ensemble proviennent toutes d'un noeud amont, lui-même alimenté en gaz par une conduite d'alimentation de section interne $\Omega$, le dimensionnement de ce noeud amont étant alors tel que:

$$\Omega/\Sigma\omega_i \geqq 1, \text{ préférentiellement} \geqq 1,5,$$

où $\Sigma\omega_i$ représente la somme des sections internes des conduites d'amenée.

Dans une telle configuration présentant un noeud amont, si une (ou plusieurs) des conduites d'amenée de gaz comporte(nt) elle(s)-même(s) des orifices d'injection de gaz, le dimensionnement de l'ensemble sera alors conforme à la relation :

$$\Omega / (\Sigma\phi_i + \Sigma\alpha_i) \geqq 1 \text{ préférentiellement} \geqq 1,5,$$

où $\Sigma\phi_i$ représente la somme des sections des orifices d'injection de gaz de l'ensemble de canalisations, $\Sigma\alpha_i$ représente la somme des sections des orifices d'injection de la ou des conduite(s) d'amenée considérée(s) qui comporte(nt) des orifices d'injection de gaz, et $\Omega$, la section interne de la conduite d'alimentation.

Pour chaque canalisation ou conduite d'amenée comportant des orifices d'injection de gaz, ces orifices sont préférentiellement dirigés vers le haut de l'enceinte quand l'injecteur est situé dans la partie supérieure de l'enceinte et vers le bas de l'enceinte quand l'injecteur est situé dans la partie inférieure de l'enceinte.

Pour ce qui est des définitions de ce que l'on entend par "noeud", "canalisations" et "conduites", "orifices d'injection de gaz" selon l'invention, on se reportera au document FR-A-93.15503, sus-mentionné, on rappellera simplement ici que par "canalisation" et "conduite", on entend, selon l'invention, tout type de canalisation de transport ou d'amenée de gaz, qu'elle soit rectiligne comme c'est le cas classiquement ou courbe, de section par exemple circulaire mais aussi carrée ou rectangulaire, dans des matériaux très variables selon le gaz envisagé (compatibilité chimique), par exemple en inox, en cuivre, en PVC etc..

Les "orifices d'injection de gaz" présents le cas échéant sur certaines de ces canalisations ou conduites d'amenée doivent alors s'entendre comme des trous permettant au gaz de s'échapper de la dite canalisation ou conduite, généralement transversalement à son sens de circulation dans la canalisation ou conduite (selon la forme des trous).

Par "noeud", on entend, selon l'invention, aussi bien un simple point de raccordement qu'un dispositif adéquat (type capacité tampon), définissant un volume, dans lequel aboutit le gaz amené par la conduite, et d'où il repart vers le sous-ensemble de canalisations avec lequel il communique.

Dans le cas où l'injecteur se réduit à une simple canalisation comportant des orifices, alimentée en gaz en une de ses extrémités, la relation $\Sigma\omega_i / \Sigma\phi_i \geqq 1$, prendra en compte un seul $\omega_i$ qui représente la section interne de la canalisation elle même et $\Sigma\phi_i$ qui représente la somme des sections des orifices d'injection de la canalisation, le "noeud primaire" selon l'invention étant alors ici un point de raccordement "fictif" intermédiaire entre l'extrémité de la canalisation et la partie de la canalisation comportant des orifices.

Selon une des mises en oeuvre de l'invention, lorsque l'ensemble contient une ou des portions de canalisation de section carrée ou rectangulaire comportant des orifices d'injection de gaz et/ou une ou des conduites d'amenée comportant des orifices d'injection de gaz, ces portions ou conduites d'amenée sont constituées d'une partie inférieure non perforée en forme de U sur laquelle est montée une tôle perforée en forme de U renversé.

Selon une des mises en oeuvre de l'invention, l'enceinte est équipée d'au moins une voie d'évacuation du gaz injecté.

L'invention concerne également un procédé de mesure sous atmosphère contrôlée, de la mouillabilité d'une surface par une brasure métallique liquide, se caractérisant par le fait que l'on utilise un dispositif tel que celui précédemment décrit, et en ce que l'on injecte un gaz au travers dudit injecteur, la vitesse du gaz en sortie des orifices d'injection de gaz du ou des ensemble(s) de canalisations étant alors préférentiellement supérieure à 0,5 mètre/seconde, et plus préférentiellement supérieure à 1 mètre/seconde.

Selon un des aspects de l'invention, le nombre de Reynolds du flux de gaz en sortie d'ensemble et/ou en sortie de diffuseur est inférieur à 2000, de façon à atteindre un régime d'écoulement aussi proche que possible du régime laminaire (le nombre de Reynolds s'évaluant par le rapport $V \times D / \nu$, où V représente la vitesse moyenne du gaz à la sortie d'un orifice d'injection, D représente le diamètre intérieur de cet orifice et $\nu$ la viscosité cinématique du gaz considéré).

D'autres caractéristiques et avantages de la présente invention ressortiront de la description suivante de modes de réalisation donnés à titre illustratif mais nullement limitatif, faite en relation avec les dessins annexés, sur lesquels :
- la figure 1 de la présente demande donne une représentation schématique en perspective d'une chambre selon l'invention, comportant un injecteur;
- la figure 2 de la présente demande illustre schématiquement un exemple de dispositif convenant pour la mise en oeuvre de l'invention ;
- la figure 3 donne une représentation schématique en vue de dessus de la chambre du dispositif de la figure 2, et de l'injecteur qu'elle inclut; et
- la figure 4 donne le détail en section de la structure des deux canalisations de la figure 3.

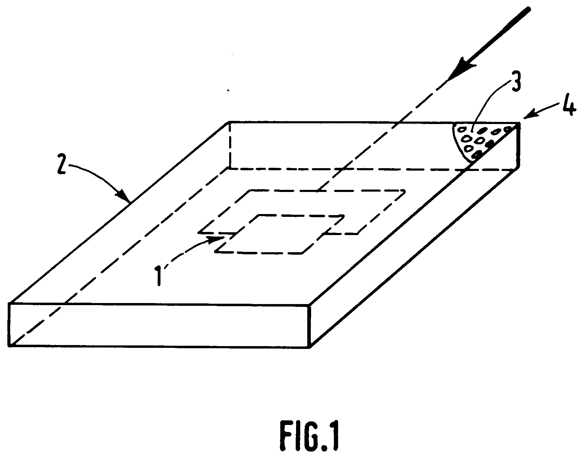

Sur la figure 1 de la présente demande est schématisée une chambre convenant pour la mise en oeuvre de l'invention, constituée par un ensemble de canalisations 1 (simplement schématisé ici sous la forme d'un trait tireté), inclus dans un capot 2 dont la partie supérieure 3 est constituée par une structure de diffuseur partiellement schématisé au coin 4 du capot.

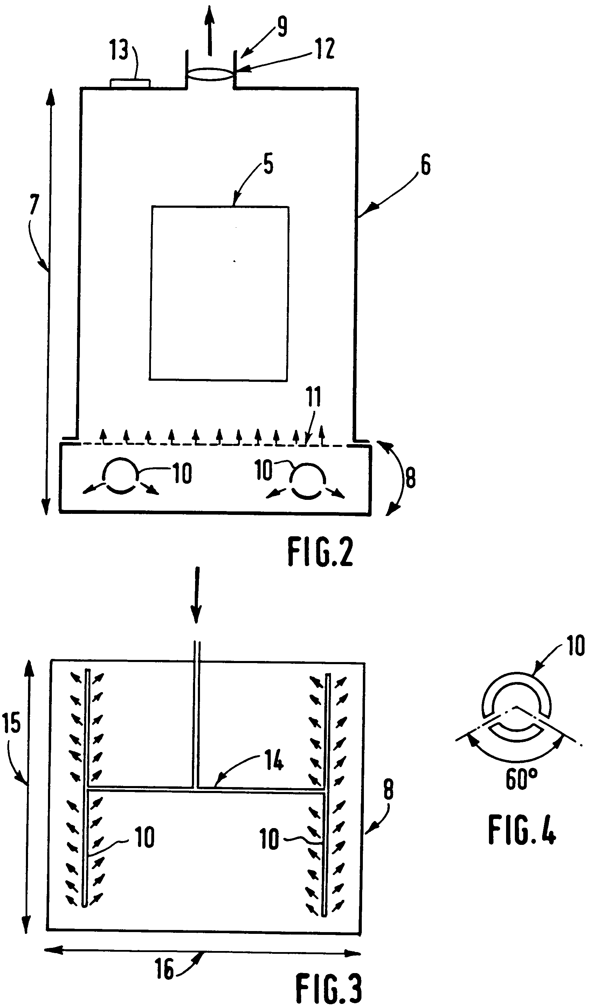

La figure 2 illustre un exemple de dispositif convenant pour la mise en oeuvre de l'invention. On reconnaît sur cette figure la présence d'un méniscographe schématisé en 5, inclus dans une enceinte 6, comportant en sa partie inférieure une chambre 8, dans laquelle est disposé un injecteur qui sera détaillé ci-dessous dans le cadre de la figure 3, cet injecteur comportant deux canalisations 10. La chambre 8 comporte en sa partie supérieure une structure de diffuseur 11, la séparant du reste de l'enceinte et notamment du méniscographe. La flèche 7 représente un ordre de grandeur de la hauteur de l'enceinte, ici pour l'exemple représenté de l'ordre de 1,2 mètre.

L'appareil (méniscographe) 5 repose par exemple sur un système de barres transversales (non représentées sur la figure 2) disposées en travers de l'enceinte, à plus ou moins grande distance au dessus du diffuseur.

On remarque la présence dans la partie haute de l'enceinte d'une voie d'évacuation 9 des gaz, munie d'un papillon 12 permettant le maintien en pression de l'enceinte, et la présence en 13 d'une soupape de sécurité.

La figure 3 permet de mieux visualiser en vue de dessus la structure de la chambre 8 et de l'injecteur qui s'y trouve (la structure de diffuseur n'est pas représentée pour faciliter la compréhension). L'injecteur 14 comporte deux canalisations 10 équipées d'orifices d'injection.

Les flèches symbolisées 15 et 16 donnent un ordre de grandeur des dimensions de la chambre 8, pour le cas représenté ici de l'ordre de 80 cm pour une des dimensions et 60 cm pour la seconde dimension.

Chacune des deux canalisations 10 comporte par exemple deux rangées de quinze orifices de 4 mm de diamètre, donnant ainsi lieu à la présence dans l'ensemble de 60 trous. Pour l'exemple représenté, et pour chaque canalisation 10, qui se trouve être ici en matière plastique, les deux rangées de trous sont dirigées vers le bas de l'enceinte (figure 4), c'est-à-dire vers la face de la chambre opposée à la structure de diffuseur 11, avec la présence d'un angle de 60° entre les deux rangées d'orifices.

La canalisation 10 donnée en exemple dans le cadre des figures 2, 3 et 4 a pour diamètre extérieur 32 mm, l'épaisseur du matériau étant de 2,4 mm.

Un dispositif tel que celui décrit dans le cadre des figures 2, 3, 4 a été testé dans les conditions suivantes de mise en oeuvre :

- l'appareil 5 de mesure de brasabilité est un méniscographe de la marque "METRONELEC", référence ST 40 ;
- l'injecteur 14 respecte les règles de dimensionnement selon l'invention ;
- le diffuseur 11 est une grille en acier inoxydable, dont le pourcentage de vide est de 23 %;
- on balaie l'enceinte au travers du diffuseur 11 en injectant un débit de 20 m³/heure d'azote dans l'injecteur 14. L'azote utilisé est de l'azote de type cryogénique contenant moins de 5 ppm d'oxygène résiduel.

Les tests effectués ont pour but de démontrer que le dispositif selon l'invention :

- n'introduit pas de surchauffe de l'atmosphère autour du bain de brasure ;
- tout en permettant un conditionnement rapide de l'atmosphère ;
- sans perturber la mesure obtenue par le capteur de force de mouillage.

Premier test : évacuation de la chaleur : L'appareil de mesure 5 de la force étant en marche (donc le bain de soudure chaud) et placé à l'intérieur de l'enceinte 6, on balaie l'enceinte avec le débit de gaz précité.

Un thermocouple présent au voisinage du bain de soudure a permis de s'assurer durant l'ensemble des manipulations que le fait de travailler sous enceinte ne provoquait pas de surchauffe de l'atmosphère de mesure.

Deuxième test : conditionnement de l'atmosphère :

L'enceinte 6 étant initialement sous air, on injecte 20 m³/heure d'azote. Au bout de 15 minutes de balayage, une analyse de l'atmosphère présente à l'intérieur de l'enceinte a permis de révéler un taux d'oxygène résiduel inférieur à 20 ppm. Le dispositif selon l'invention a donc permis un conditionnement rapide de l'atmosphère compte tenu du volume relativement important de l'enceinte autour de l'appareil 5.

Troisième test : non perturbation de la mesure :

Pour s'assurer de cette non-perturbation de la mesure du fait de la mise en place d'une atmosphère contrôlée autour de l'appareil de mesure, on a effectué des essais comparatifs avec les atmosphères suivantes :

- l'air ambiant (sans enceinte) ;
- de l'air reconstitué (80 % azote, 20 % oxygène) : injecté sous enceinte, avec un débit global de l'ordre de 20 m³/heure ;
- de l'azote seul (source cryogénique) : sous enceinte, avec débit global de l'ordre de 20 m³/ heure.

Pour chaque atmosphère de mesure, on a évalué l'efficacité de flux de brasage à la vague commercialement disponibles, en respectant le mode opératoire décrit dans la norme française NF C 90-551.

Flux testés :

- flux A: résidus non volatils = 25 % (résidus importants) ;
- flux B: résidus non volatils = 2,5 % (résidus faibles).

Ces flux A et B commercialement disponibles sont largement utilisés dans l'industrie et sont donc représentatifs des conditions industrielles couramment pratiquées.

Echantillons calibrés dont on a testé la mouillabilité : des échantillons de cuivre grade I et grade II selon la norme NF C 90-551

Brasure utilisée : un bain liquide d'environ 1,4 kg de brasure étain/plomb (Sn60-Pb40).

Pour chaque ensemble de paramètres testés (une atmosphère, un flux, un grade de cuivre), une dizaine d'essais ont été effectués, le résultat de chaque essai étant la force maximale de mouillage enregistrée pendant la durée d'immersion de l'échantillon.

Les résultats donnés ci-dessous dans chaque cas représentent la force maximum "moyennée" sur les dix essais et l'écart-type correspondant.

Flux A / cuivre grade I :
- air reconstitué: Fmax = 7,53 mN, écart-type = 0,05
- air: Fmax = 7,58 mN, écart type = 0,05
- azote : Fmax = 8,18 mN, écart-type = 0,1

Flux A / cuivre grade II :
- air reconstitué : Fmax = 7,52 mN, écart-type = 0,065
- air : Fmax = 7,57 mN, écart-type = 0,08
- azote : Fmax = 8,34 mN, écart-type = 0,11

Flux B / cuivre grade I :
- air reconstitué : Fmax = 7,3 mN, écart-type = 0,33
- air : Fmax = 7,51 mN, écart-type = 0,36
- azote : Fmax = 8,19 mN, écart-type = 0,28

Flux B / cuivre grade II :
- air reconstitué : Fmax = 6,45 mN, écart-type = 0,99
- air : Fmax = 6,29 mN, écart-type = 1,07
- azote : Fmax = 7,82 mN, écart-type = 0,42.

Le résultat de ces essais comparatifs montre clairement que les résultats des essais obtenus sous air ambiant (sans enceinte) et sous air reconstitué (avec enceinte) sont statistiquement identiques, et donc que la mise en place de l'atmosphère controlée dans l'enceinte n'a pas perturbée la mesure.

Les résultats des essais obtenus sous azote ont permis de vérifier les résultats publiés dans la litterature selon lesquels le mouillage obtenu sous atmosphère protectrice (concentration résiduelle d'oxygène réduite) est systématiquement amélioré par rapport à un fonctionnement classique sous air (Fmax sous $N_2$ supérieure à Fmax sous air).

Ces essais ont donc ainsi permis de démontrer que le dispositif de mesure de mouillabilité selon l'invention permet d'effectuer des mesures sous atmosphère contrôlée, qu'il s'agisse d'air ou par exemple d'une atmosphère inerte, ceci dans des conditions de conditionnement d'atmosphère rapide et économiquement acceptable, et ne perturbant pas le fonctionnement de l'appareil de mesure.

Quoique la présente invention ait été décrite en relation avec des modes de réalisation particuliers, elle ne s'en trouve pas limitée mais est au contraire susceptible de modifications et de variantes qui apparaîtront à l'homme de l'art dans le cadre des revendications ci-après.

**Revendications**

1. Dispositif permettant d'effectuer des mesures de mouillabilité sous atmosphère contrôlée, comprenant un appareil (5) de mesure de la mouillabilité d'au moins une portion de surface d'un échantillon par une brasure métallique liquide, appareil du genre permettant la mesure de la force de mouillage exercée par la brasure sur la surface lors de l'immersion de tout ou partie de l'échantillon dans un bain de ladite brasure liquide,

caractérisé en ce que l'appareil est au moins partiellement inclus dans une enceinte (6), permettant d'isoler au moins le bain de brasure de l'atmosphère environnante, l'enceinte comportant en sa partie supérieure ou en sa partie inférieure un injecteur (1,14) de gaz qui comprend au moins un ensemble de canalisations (10) monté en série et/ou en parallèle, dont au moins une portion de canalisation comporte des orifices d'injection de gaz, ledit ensemble étant alimenté par au moins une conduite d'amenée de gaz, chaque conduite étant connectée à l'ensemble au niveau d'un noeud primaire de connexion, le dimensionnement de l'ensemble respectant la relation suivante :

$\Sigma\omega_i / \Sigma\phi_i \geq 1$ préférentiellement $\geq 1,5$ ;

où $\Sigma\omega_i$ représente la somme des sections internes des conduites d'amenée de gaz qui alimentent l'ensemble et $\Sigma\phi_i$ représente la somme des sections des orifices d'injection de gaz de l'ensemble de canalisations.

2. Dispositif selon la revendication 1, caractérisé en ce que l'enceinte comporte en sa partie supérieure ou en sa partie inférieure, une chambre (8), séparée du reste de l'enceinte par une structure de diffuseur (11), et à l'intérieur de laquelle est disposé ledit injecteur de gaz (1,14).

3. Dispositif selon la revendication 2, caractérisé en ce que le diffuseur (11) est constitué d'une tôle perforée.

4. Dispositif selon la revendication 3, caractérisé en ce que le pourcentage de vide de la tôle perforée est inférieur à 40 % préférentiellement inférieur à 20 %.

5. Dispositif selon la revendication 2, caractérisé en ce que le diffuseur est constitué d'une plaque réalisée en un matériau poreux.

6. Dispositif selon l'une des revendications 1 à 5, caractérisé en ce que les conduites d'amenée de gaz sur l'ensemble proviennent toutes d'un noeud amont, lui-même alimenté en gaz par une conduite d'alimentation de section interne $\Omega$, le dimensionnement de ce noeud amont étant tel que:

$\Omega/\Sigma\omega_i \geq 1$, préférentiellement $\geq 1,5$,

où $\Sigma\omega_i$ représente la somme des sections internes desdites conduites d'amenée.

7. Dispositif selon l'une des revendications 1 à 5, caractérisé en ce que au moins une desdites conduites d'amenée de gaz comporte elle-même des orifices d'injection de gaz et en ce que le dimensionnement de l'ensemble suit alors la relation suivante:

$\Sigma\omega_i / (\Sigma\phi_i + \Sigma\alpha_i) \geq 1$, préférentiellement $\geq 1,5$,

où $\Sigma\omega_i$ représente la somme des sections internes desdites conduites d'amenée de gaz qui alimentent l'ensemble, $\Sigma\phi_i$ représente la somme des sections des orifices d'injection de gaz de l'ensemble de canalisations, et $\Sigma\alpha_i$ représente la somme des sections des orifices d'injection de la ou des conduite(s) considérée(s) qui comporte(nt) des orifices d'injection de gaz.

8. Dispositif selon la revendication 6, caractérisé en ce qu'au moins une des conduites d'amenée de gaz comporte elle-même des orifices d'injection de gaz et en ce que le dimensionnement de l'ensemble suit alors la relation suivante :

$\Omega / (\Sigma\phi_i + \Sigma\alpha_i) \geq 1$ préférentiellement $\geq 1,5$,

où $\Sigma\phi_i$ représente la somme des sections des orifices d'injection de gaz de l'ensemble de canalisations, $\Sigma\alpha_i$ représente la somme des sections des orifices d'injection de la ou des conduite(s) d'amenée considérée(s) qui comporte(nt) des orifices d'injection de gaz, et $\Omega$, la section in-

terne de ladite conduite d'alimentation.

9. Dispositif selon l'une des revendications 1 à 8, caractérisé en ce que pour chaque canalisation ou conduite d'amenée comportant des orifices d'injection de gaz, ces orifices sont dirigés vers le haut de l'enceinte quand l'injecteur est situé dans la partie supérieure de l'enceinte et vers le bas de l'enceinte quand l'injecteur est situé dans la partie inférieure de l'enceinte.

10. Dispositif selon l'une des revendications 1 à 9, caractérisé en ce que l'enceinte est équipée d'au moins une voie (9) d'évacuation du gaz.

11. Procédé de mesure sous atmosphère contrôlée de la mouillabilité d'une surface par une brasure métallique liquide, caractérisé en ce que l'on utilise un dispositif tel que revendiqué selon l'une des revendications 1 à 10, et en ce que l'on injecte un gaz au travers dudit injecteur, la vitesse du gaz en sortie des orifices d'injection de gaz du ou des ensemble(s) de canalisations étant supérieure à 0,5 mètre/seconde, préférentiellement supérieure à 1 mètre/seconde.

12. Procédé selon la revendication 11, caractérisé en ce que le nombre de Reynolds du flux de gaz en sortie d'ensemble et/ou en sortie de diffuseur est inférieur à 2 000.

FIG.1

FIG.2

FIG.3

FIG.4

EP 0 686 844 A1

Office européen
des brevets

**RAPPORT DE RECHERCHE EUROPEENNE**

Numero de la demande

EP 95 40 1334

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE-A-37 14 012 (IST INGENIEURDIENST FÜR SICHERE TECHNIEK) 17 Novembre 1988 * abrégé * | 1,11 | G01N13/02 B23K31/12 |
| A | PROCEEDINGS OF THE TECHNICAL PROGRAM: NATIONAL ELECTRONIC PACKAGING AND PRODUCATION CONFERENCE, NEPCON EAST '91, BOSTON, MA, USA, 10-13 JUNE 1991, 1991, DES PLAINES, IL, USA, CAHNERS EXPOSITION GROUP, USA, pages 481-490, MEHTA A ET AL 'Nitrogen-based soldering-tests and results' * page 482 - page 484 * | 1,11 | |
| A | US-A-5 121 874 (DEAMBROSIO CARLOS A ET AL) 16 Juin 1992 * abrégé * | 1,11 | |
| A | US-A-3 060 727 (CORTISS W) * colonne 2, ligne 30 - ligne 63 * | 1,11 | DOMAINES TECHNIQUES RECHERCHES (Int.Cl.6) |
| A | JOURNAL OF SCIENTIFIC INSTRUMENTS, vol. 43, no. 9, LONDON GB, pages 647-648, MOREL C 'Apparatus for contact angle measurements between molten salts and solids and surface tensions of molten salts at high temperatures' * 3. Experimental procedure * | 1,11 | G01N B23K |

Le présent rapport a été établi pour toutes les revendications

| Lieu de la recherche | Date d'achèvement de la recherche | Examinateur |
|---|---|---|
| LA HAYE | 5 Septembre 1995 | Bindon, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

11